# EUROPÄISCHE PATENTSCHRIFT

(11) **EP 2 443 373 B1**
(45) Veröffentlichungstag und Bekanntmachung des Hinweises auf die Patenterteilung: **16.09.2015**
(21) Anmeldenummer: 10722056.8
(22) Anmeldetag: 19.05.2010
(51) Int. Cl.: F16K 31/08, F16K 37/00, H01F 7/16

(54) **ELEKTROMAGNETVENTIL**
ELECTROMAGNETIC VALVE
ELECTROVANNE

(30) Priorität: 18.06.2009 DE 102009029826
(43) Veröffentlichungstag der Anmeldung: 25.04.2012
(73) Patentinhaber: Pierburg GmbH, 41460 Neuss (DE)
(72) Erfinder: HEINIG, Chantal, 50259 Pulheim (DE); KURTH, Guido, 47899 Krefeld (DE); ZURKE, Janusz, 47638 Straelen (DE)
(74) Vertreter: Patentanwälte ter Smitten Eberlein Rütten Partnerschaftsgesellschaft
(86) Internationale Anmeldenummer: PCT/EP2010/056889
(87) Internationale Veröffentlichungsnummer: WO 2010/145906

(56) Entgegenhaltungen:
- EP-A1- 1 489 309
- EP-A2- 1 980 777
- WO-A1-2007/076750
- JP-A- 1 082 606
- US-A- 4 746 886
- US-A- 4 797 645

## Beschreibung

Die Erfindung betrifft ein Elektromagnetventil mit mindestens einem elektromagnetischen Kreis, der aus einer auf einen Spulenträger gewickelten Spule , einem Anker, zwei Kernen und mindestens einer magnetisierbaren Rückschlusseinrichtung aufgebaut ist und mindestens einem Permanentmagneten, wobei der Anker zwischen zwei Endlagen, die durch die Kerne ausgebildet sind, und zumindest indirekt auf ein Ventilverschlussglied einwirkt, wobei Mittel vorgesehen sind, die den Anker im nicht bestromten Zustand fixieren, wobei eine Bestromung der Spule eine Bewegung des Ankers in die erste oder die zweite Endlage verursacht, wobei die Spule und der mindestens eine Permanentmagnet in axialer Richtung zueinander derart angeordnet sind, dass in der Rückschlusseinrichtung sich zwei in axialer Richtung aufeinanderfolgende permanentmagnetische Kreise ausbilden, wodurch im unbestromten Zustand der Anker in einer Endlage fixiert ist, wobei eine Steuereinrichtung vorgesehen ist, über die die Spule umpolbar ist, wobei die Umpolung der Spule einen Wechsel der Stromrichtung und damit eine Richtungsumkehr der elektromagnetischen Kreise verursacht. Desweiteren betrifft die Erfindung ein Verfahren zur Steuerung eines derartigen Elektromagnetventils.

Derartige Elektromagnetventile sind hinlänglich bekannt. Die DE 10 2005 011 596 B4 beschreibt beispielsweise ein Elektromagnetventil, bei dem eine Feder eine Kraft auf den Anker ausübt, die in Richtung auf die zweite Endstellung wirkt und ein Permanentmagnet eine Kraft auf den Anker in die Richtung der ersten Endlage ausübt. Auf diese Weise soll sich der Anker im unbestromten Zustand in einer stabilen Lage zwischen der ersten Endlage und der zweiten Endlage befinden. Es sollte deutlich sein, dass die sogenannte stabile Zwischenlage bei unvorhergesehenen äußeren Einflüssen, wie heftigen Stößen und/oder Bewegungen verlassen werden kann, wodurch der Anker vielleicht in eine nicht gewollte Endlage gerät.

Aus der US 4 797 645 A ist ein gattungsgemäßer elektromagnetischer Anker bekannt, der neben dem elektromagnetischen Kreises, einen Permanentmagneten und zwei die Endlage des Akers definierende Kerne aufweist, wobei die Umpolung eine Lageänderung den Anker auslöst. Jedoch erfolgt die Lageänderung noch sehr träge.

Es ist daher Aufgabe der Erfindung, ein Elektromagnetventil bereitzustellen, das die vorgenannten Nachteile vermeidet und mit einer möglichst geringen Bauteileanzahl auf günstige Weise herstellbar ist.

Diese Aufgabe wird erfindungsgemäß nach Anspruch 1 dadurch gelöst, dass die Rückschlusseinrichtung im Wesentlichen aus zwei axial aufeinander folgenden Rückschlussblechteilen oder - abschnitten aufgebaut ist, wobei die Spule im ersten Rückschlussblechteil oder - abschnitt und der mindestens eine Permanentmagnet im zweiten Rückschlussblechteil oder -abschnitt angeordnet sind, wobei der mindestens eine Permanentmagnet auf einem Weicheisenteil angeordnet ist, auf dessen Innenteil ein Lagermittel für den Anker vorgesehen ist, wobei das Lagermittel auf der Innenseite des Spulenträgers und auf der Innenseite des Weicheisenteils angeordnet ist.

Das erfindungsgemäße Verfahren nach Anspruch 6 zeichnet sich dadurch aus, dass durch den Permanentmagneten in der Rückschlusseinrichtung zwei permanentmagnetische Kreise ausgebildet werden, wodurch der Anker im nicht bestromten Zustand in einer der beiden Endlagen fixiert wird.

Besonders vorteilhaft ist es, wenn der mindestens eine Permanentmagnet in radialer Richtung magnetisiert ist. In vorteilhafter Weise kann die Endlage, in der sich der Anker im unbestromten Zustand befindet, in einer Speichereinrichtung speicherbar sein. Diese Speichereinrichtung kann in der Steuereinrichtung vorgesehen sein.

Auch ist es möglich, dass die Speichereinrichtung im Elektromagnetventil vorgesehen ist.

Ein weiteres vorteilhaftes Verfahren sieht vor, dass die jeweilige Endlage des Ankers in einer Speichereinrichtung gespeichert wird.

Eine Ausführungsform der Erfindung wird nachfolgend anhand der Zeichnung näher beschrieben, hierin zieigen:
- Figur 1: eine schematische Schnittdarstellung eines erfindungsgemäßen Elektromagnetventils,
- Figur 2: eine schematische Schnittdarstellung eines erfindungsgemäßen Elektromagnetventils im unbestromten Zustand mit Darstellung der permanentmagnetischen Kreise,
- Figur 3: eine schematische Schnittdarstellung eines erfindungsgemäßen Elektromagnetventils bei positiver Bestromung, und
- Figur 4: eine schematische Darstellung eines erfindungsgemäßen Elektromagnetventils bei negativer Bestromung.

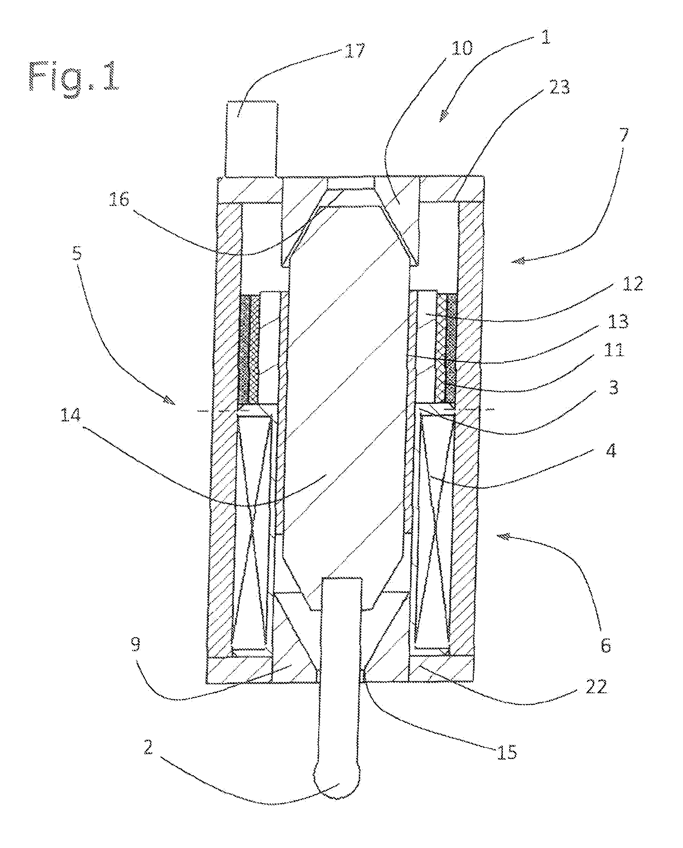

Figur 1 zeigt ein schematisch dargestelltes erfindungsgemäßes Elektromagnetventil 1, das im vorliegenden Ausführungsbeispiel auf einen Ventilstößel 2 einwirkt, derart, dass ein nicht dargestelltes Ventilverschlussglied geöffnet oder verschlossen werden kann.

Ein derartiges Elektromagnetventil 1 könnte beispielsweise als Antrieb für ein Schubumluftventil eingesetzt werden.

Im vorliegenden Ausführungsbeispiel weist das Elektromagnetventil 1 im Wesentlichen eine auf einen Spulenträger 3 gewickelte Spule 4 auf. Des Weiteren ist eine Rückschlusseinrichtung 5 vorgesehen, die im vorliegenden Fall im Wesentlichen aus zwei Rückschlussblechabschnitten 6 und 7 besteht. Aus montagetechnischen Gründen sind die Rückschlusseinrichtung 5 und insbesondere die Rückschlussblechabschnitte 6 und 7 nicht einteilig ausgeführt, sondern weisen noch sogenannte Scheiben 22, 23 auf, wobei in den Scheiben 22, 23 die Kerne 9 und 10 angeordnet sind.

Im zweiten Rückschlussblechabschnitt 7 ist des Weiteren mindestens ein radikal magnetisierter Permanentmagnet 11 vorgesehen, der im vorliegenden Fall als Rundmagnet ausgeführt ist, aber auch aus mehreren Segmenten bestehen kann, und sich in Axialrichtung an die Spule 4 abschließt.

Ein im vorliegenden Ausführungsbeispiel als DU-Buchse ausgeführte Lagermittel 13 ist auf der Innenseite des Spulenträgers 3 und der Innenseite des Weicheisenteil 12 angeordnet. In ihr ist ein Anker 14 beweglich gelagert, der an seinem einen Ende formschlüssig mit dem Ventilstößel 2 verbunden ist. Der Anker 14 ist grundsätzlich zwischen einer ersten Endlage 15, die durch den ersten Kern 9 gebildet wird, und einer zweiten Endlage 16, die durch den zweiten Kern 10 gebildet wird, bewegbar.

Mit 17 ist lediglich schematisch eine Steuereinrichtung für das Elektromagnetventil 1 dargestellt, die im vorliegenden Ausführungsbeispiel auch als Speichereinrichtung dient.

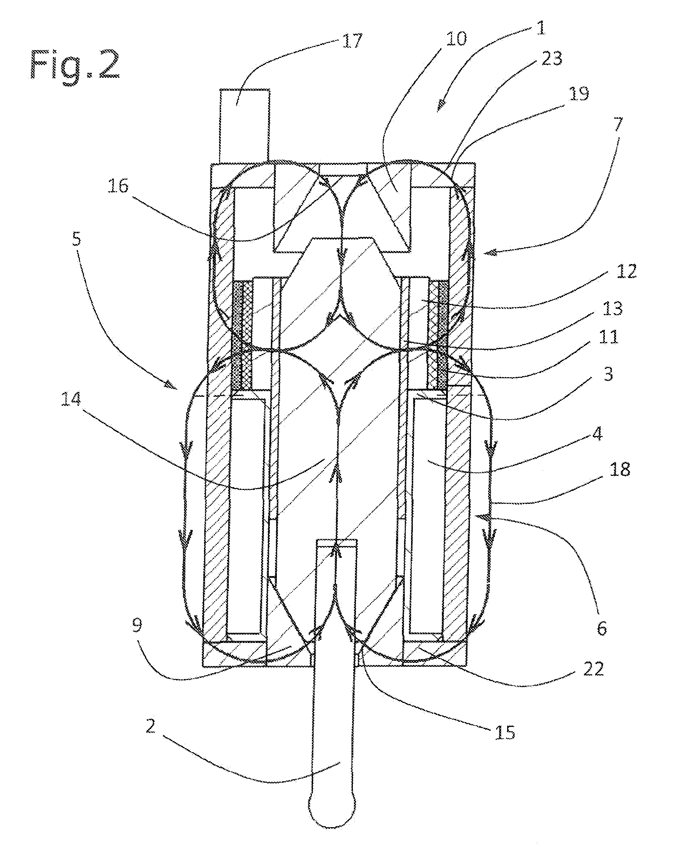

Figur 2 zeigt in schematischer Darstellung eine Schnittansicht des erfindungsgemäßen Elektromagnetventils 1, bei dem die in der Rückschlusseinrichtung durch den Permanentmagneten 11 induzierten zwei in axialer Richtung aufeinander folgenden permanentmagnetischen Kreise 18, 19 eingezeichnet sind. Es sollte deutlich sein, dass durch die Wirkung der permanentmagnetischen Kreise 18, 19 der Anker 14 in der jeweiligen Endlage 15, 16 fixiert wird. In der Figur 2 ist dies, wie dargestellt, die erste Endlage 15. Diese Endlage 15 kann auf bekannte Weise im Steuergerät 17 gespeichert werden, so dass diese spezifische Stellung in einer Motorsteuereinheit hinterlegt ist, so dass beim Start des Motors keine Referenzanfahrt des Elektromagnetventils notwendig ist.

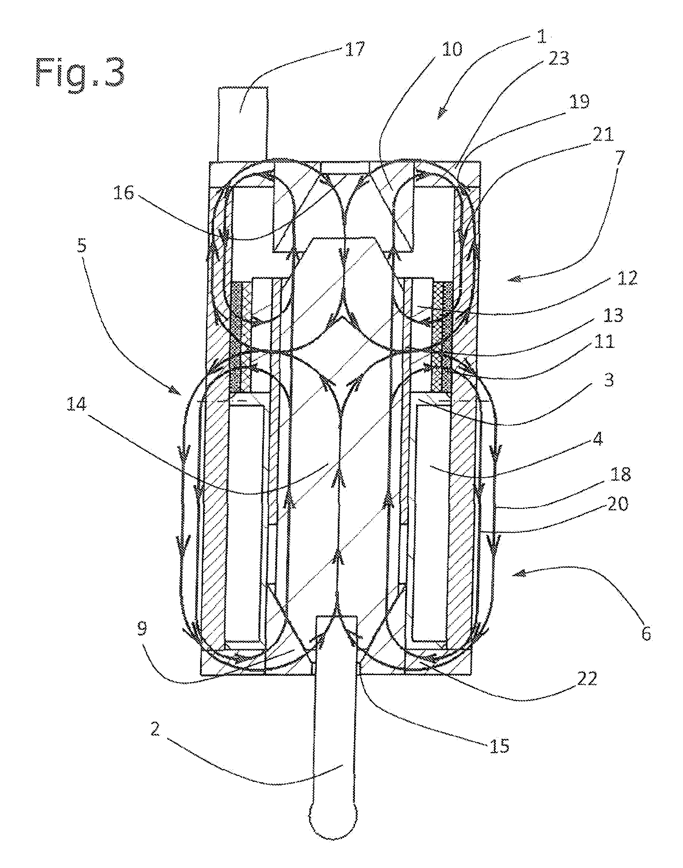

Figur 3 zeigt nun den Elektromagneten 1 bei positiver Bestromung der Spule 4. Deutlich zu erkennen ist, wie sich die elektromagnetischen Kreise 20, 21 und die permanentmagnetischen Kreise 18, 19 überlagern. Dies führt in vorliegendem Ausführungsbeispiel dazu, dass bei positiver Bestromung der Anker 15 entweder in die erste Endlage 15 bewegt wird, oder in dieser verharrt, je nachdem, wie der Ausgangszustand war.

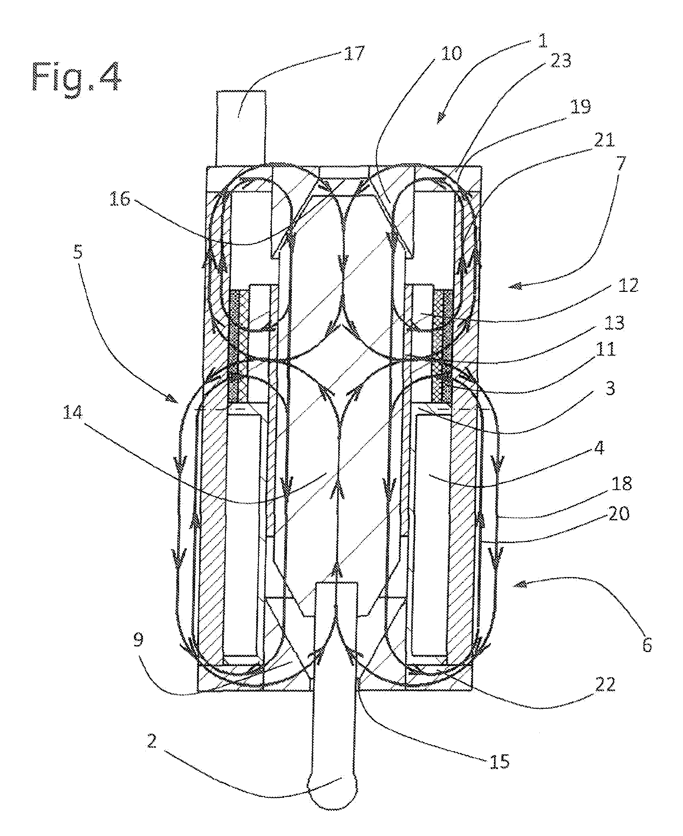

Figur 4 zeigt nun die Überlagerung der elektromagnetischen 20, 21 und der permanentmagnetischen 18, 19 Kreise bei negativer Bestromung der Spule 4. Die negative Bestromung sorgt dafür, dass der Anker in die zweite Endlage 16 bewegt wird.

Es sollte deutlich sein, dass die Erfindung nicht auf das vorliegende Ausführungsbeispiel beschränkt ist. Insbesondre ist es denkbar, dass keine Umpolung der Spule vorgenommen wird und dass der Anker 14 beispielsweise durch eine Feder, die zwischen dem Kern 9 und dem Anker 14 angeordnet ist, in die zweite Endlage 16 bewegt werden kann. Auch kann das Steuergerät 17 außerhalb des Elektromagnetventils 1 angeordnet werden. Des Weiteren muss nicht zwangsläufig die Speicherfunktion im Steuergerät 17 integriert sein.

Auch ist es möglich, dass z. B. der Kern 10 und die Scheibe 23 einteilig ausgeführt sind.

## Patentansprüche

1. Elektromagnetventil mit mindestens einem elektromagnetischen Kreis, der aus einer auf einen Spulenträger (3) gewickelten Spule (4), einem Anker, (14) zwei Kernen (9, 10), mindestens einer magnetisierbaren Rückschlusseinrichtung (5) und mindestens einem Permanentmagneten (11) ausgebaut ist, wobei der Anker (14) zwischen zwei Endlagen (15, 16), die durch die Kerne (9, 10) ausgebildet sind, beweglicht gelagert ist, und zumindest indirekt auf ein Ventilverschlussglied (2) einwirkt, wobei Mittel vorgesehen sind, die den Anker im nicht bestromten Zustand fixieren, wobei eine Bestromung der Spule (4) eine Bewegung des Ankers (14) in die erste (15) oder die zweite Endlage (16) verursacht, wobei die Spule (4) und der mindestens eine Permanentmagnet (11) in axialer Richtung zueinander derart angeordnet sind, dass in der Rückschlusseinrichtung (5) sich zwei in axialer Richtung aufeinanderfolgende permanentmagnetische Kreise (18; 19) ausbilden, wodurch im unbestromten Zustand der Anker (14) in einer Endlage (15; 16) fixiert ist, wobei eine Steuereinrichtung (17) vorgesehen ist, über die die Spule (4) umpolbar ist, wobei die Umpolung der Spule (4) einen Wechsel der Stromrichtung und damit eine Richtungsumkehr der elektromagnetischen Kreise (20, 21) verursacht, **dadurch gekennzeichnet, dass** die Rückschlusseinrichtung (5) im Wesentlichen aus zwei axial aufeinander folgenden Rückschlussblechteilen oder -abschnitten (6, 7) aufgebaut ist, wobei die Spule (4) im ersten Rückschlussblechteil oder -abschnitt (6) und der mindestens eine Permanentmagnet (11) im zweiten Rückschlussblechteil oder -abschnitt (7) angeordnet ist, wobei der mindestens eine Permanentmagnet (11) auf einem Weicheisenteil (12) angeordnet ist, auf dessen Innenteil ein Lagermittel (13) für den Anker (14) vorgesehen ist, wobei das Lagermittel auf der Innenseite des Spulenträgers und auf der Innenseite des Weicheisenteils angeordnet ist.

2. Elektromagnetventil nach Anspruch 1, **dadurch gekennzeichnet, dass** der mindestens eine Permanentmagnet (11) in radialer Richtung magnetisiert ist.

3. Elektromagnetventil nach einem der vorhergehenden Ansprüche, **dadurch gekennzeichnet, dass** eine Speichereinrichtung vorgesehen ist, die die Endlage (15; 16), in der sich der Anker (14) im unbestromten Zustand befindet , speichert, wobei die Endlage in einer Motorsteuereinheit hinterlegbar ist, so dass beim Start eines Motors keine Referenzanfahrt des Elektromagnetventils notwendig ist.

4. Elektromagnetventil nach Anspruch 3, **dadurch gekennzeichnet, dass** die Speichereinrichtung in der Steuereinrichtung (17) vorgesehen ist.

5. Elektromagnetventil nach Anspruch 3 oder 4, **dadurch gekennzeichnet, dass** die Speichereinrichtung im Elektromagnetventil (1) vorgesehen ist.

6. Verfahren zur Steuerung eines Elektromagnetventils nach Anspruch 1, wobei durch den Permanentmagneten (11) in der Rückschlusseinrichtung (5) zwei permanentmagnetische Kreise (18; 19) ausgebildet werden, wodurch der Anker (14) im nicht bestromten Zustand in einer der beiden Endlagen (15; 16) fixiert wird.

7. Verfahren zur Steuerung eines Elektromagnetventils nach Anspruch 6, wobei eine Speichereinrichtung vorgesehen ist, wobei die jeweilige Endlage (15; 16) des Ankers (14) in der Speichereinrichtung gespeichert wird, welche Endlage in einer Motorsteuereinheit hinterlegbar ist, so dass beim Start eines Motors keine Referenzanfahrt des Elektromagnetventils notwendig ist.

## Claims

1. A solenoid valve having at least one electromagnetic circuit that is formed by a coil (4) wound on a coil carrier (3), an armature (14), two cores (9, 10), at least one magnetizable feedback device (5) and at least one permanent magnet (11), wherein the armature (14) is supported for movement between two end positions (15, 16) defined by the cores (9, 10) and acts at least indirectly on a valve-closure member (2), wherein means are provided that fix the armature in the deenergized state, wherein energizing the coil (4) causes a movement of the armature (14) to the first (15) or the second end position (16), wherein the coil (4) and the at least one permanent magnet (11) are arranged relative to one another in the axial direction such that two axially successive permanently magnetic circuits (18; 19) form in the feedback device (5), whereby, in the deenergized state, the armature (14) is fixed in one end position (15; 16), wherein a control means (17) is provided by which the polarity of the coil (4) can be reversed, wherein reversing the polarity of the coil (4) causes a change in the current direction and thus a reversal in the direction of the electromagnetic circuits (20, 21), **characterized in that** the feedback device (5) is substantially formed by two axially successive feedback sheet elements or sections (6, 7), wherein the coil (4) is arranged in the first feedback sheet element or section (6) and the at least one permanent magnet (11) is arranged in the second feedback sheet element or section (7), wherein the at least one permanent magnet (11) is arranged on a soft iron element (12) on the inner part of which a bearing means (13) for the armature (14) is provided, wherein the bearing means is arranged on the inner side of the coil carrier and on the inner side of the soft iron element.

2. The solenoid valve of claim 1, **characterized in that** the at least one permanent magnet (11) is magnetized in the radial direction.

3. The solenoid valve of one of the preceding claims, **characterized in that** a storage means is provided that stores the end position (15; 16) which the armature (14) is in when in the deenergized state, wherein the end position can be stored in an engine control unit so that no reference start-up of the solenoid valve is required when the engine is started.

4. The solenoid valve of claim 3, **characterized in that** the storage means is provided in the control means (17).

5. The solenoid valve of claims 3 and 4, **characterized in that** the storage means is provided in the solenoid valve (1).

6. A method of controlling a solenoid valve of claim 1, wherein the permanent magnet (11) forms two permanently magnetic circuits (18; 19) in the feedback device (5), whereby the armature (14) is fixed in one of the two end position (15; 16) when in the deenergized state.

7. The method of controlling a solenoid valve of claim 6, wherein a storage means is provided, wherein the respective end position (15; 16) of the armature (14) is stored in the storage means, wherein the end position can be stored in an engine control unit so that no reference start-up of the solenoid valve is required when the engine is started.

## Revendications

1. Electrovanne avec au moins un circuit électromagnétique formé par une bobine (4) enroulée sur un support de bobine (3), une armature (14), deux noyaux (9, 10), au moins un moyen de retour de flux (5) magnétisable et au moins un aimant permanent (11), ladite armature (14) étant supportée de manière mobile entre deux positions de fin de course (15, 16), définies par les noyaux (9, 10), et agit au moins indirectement sur un élément de fermeture de vanne (2), des moyens étant prévus qui fixent ladite armature dans l'état alimenté en courant, l'alimentation de la bobine (4) en courant effectuant le déplacement de ladite armature (14) dans la première (15) ou la deuxième position de fin de course (16), la bobine (4) et ledit au moins un aimant permanent (11) étant disposés l'un par rapport à l'autre dans la direction axiale de sorte que deux circuits (18; 19) magnétique en permanence, consécutives dans la direction axiale, sont formées dans le moyen de retour de flux (5), ladite armature (14), en état non alimentée en courant, ainsi étant fixée dans une position de fin de course (15; 16), un moyen de commande (17) étant prévu par lequel la polarité de la bobine (4) peut être inversée, l'inversion de la polarité de la bobine (4) effectuant un changement de la direction du courant et, par cela, une inversion de la direction des circuits électromagnétiques (20, 21), **caractérisée en ce que** le moyen de retour de flux (5) est essentiellement formé par deux éléments ou sections de tôle de reflux (6, 7), consécutifs dans la direction axiale, la bobine (4) étant disposée dans le premier élément ou section de tôle de reflux (6) et ledit au moins un aimant permanent (11) étant disposé dans le deuxième élément ou section de tôle de reflux (7), ledit au moins un aimant permanent (11) étant disposé sur un élément en fer doux (12) sur la partie intérieure duquel est prévu un moyen de support (13) pour ladite armature (14), ledit moyen de support étant disposé sur la face intérieure du support de bobine et la face intérieure dudit élément en fer doux.

2. Electrovanne selon la revendication 1, **caractérisée en ce que** ledit au moins un aimant permanent (11) est magnétisé dans la direction radiale.

3. Electrovanne selon l'une quelconque des revendications précédentes, **caractérisée en ce qu'**un moyen de stockage est prévu, stockant la position de fin de course (15; 16) dans laquelle se trouve ladite armature (14) dans l'état non alimenté en courant, ladite position de fin de course étant stockable dans une unité de commande de moteur de sorte qu'il n'est pas nécessaire de faire un démarrage de référence de l'électrovanne lors du démarrage d'un moteur.

4. Electrovanne selon la revendication 3, **caractérisée en ce que** le moyen de stockage est disposé dans le moyen de commande (17).

5. Electrovanne selon la revendication 3 ou 4, **caractérisée en ce que** le moyen de stockage est disposé dans l'électrovanne (1).

6. Procédé pour commander une électrovanne selon la revendication 1, dans lequel ledit au moins un aimant permanent (11) forme deux circuits (18; 19) magnétique en permanence, consécutives dans la direction axiale, dans le moyen de retour de flux (5), ladite armature (14), en état non alimentée en courant, ainsi étant fixée dans une des deux positions de fin de course (15; 16).

7. Procédé pour commander une électrovanne selon la revendication 6, dans lequel un moyen de stockage est prévu, la position de fin de course (15; 16) respective de ladite armature (14) étant stockée dans ledit moyen de stockage, ladite position de fin de course étant stockable dans une unité de commande du moteur de sorte qu'il n'est pas nécessaire de faire un démarrage de référence de l'électrovanne lors du démarrage d'un moteur.
